# EUROPÄISCHE PATENTSCHRIFT

(11) **EP 3 044 064 B1**
(45) Veröffentlichungstag und Bekanntmachung des Hinweises auf die Patenterteilung: **14.10.2020**
(21) Anmeldenummer: 14815626.8
(22) Anmeldetag: 10.12.2014
(51) Int. Cl.: B61C 9/50, B61F 3/04, B61F 3/12

(54) **ANORDNUNG MIT EINER FAHRWERKEINHEIT**
ASSEMBLY HAVING AN UNDERCARRIAGE UNIT
SYSTÈME POURVU D'UN ENSEMBLE CHÂSSIS

(30) Priorität: 13.12.2013 DE 102013225913
(43) Veröffentlichungstag der Anmeldung: 20.07.2016
(60) Teilanmeldung: 20182878.7
(73) Patentinhaber: Siemens Mobility GmbH, 81739 München (DE)
(72) Erfinder: GLINKA, Martin, 91080 Uttenreuth (DE); TEICHMANN, Martin, 8045 Graz (AT); STÜTZLE, Thorsten, 90480 Nürnberg (DE)
(86) Internationale Anmeldenummer: PCT/EP2014/077189
(87) Internationale Veröffentlichungsnummer: WO 2015/086667

(56) Entgegenhaltungen:
- EP-A1- 1 209 057
- EP-A2- 2 080 647
- GB-A- 2 425 290
- JP-A- 2008 154 401

## Beschreibung

Die Erfindung betrifft eine Anordnung für ein Fahrzeug, insbesondere ein Schienenfahrzeug, welche eine Fahrwerkeinheit mit zumindest einem ersten, auf einer Fahrbahn gestützten Radsatz und einem auf dem ersten Radsatz gestützten Grundkörper, welcher eine Kopplungseinrichtung zur mechanischen Kopplung mit zumindest einem Wagenkasten des Fahrzeugs umfasst, zumindest einen ersten Fahrmotor, der zum Antreiben des ersten Radsatzes vorgesehen ist, wenigstens eine Leistungsversorgungseinheit, die zur Versorgung des Fahrmotors mit elektrischer Leistung vorgesehen ist und zumindest eine Wechselrichtereinheit umfasst, wobei zumindest ein Bestandteil der Leistungsversorgungseinheit in einem Bereich der Fahrwerkeinheit angeordnet ist.

Eine solche Anordnung ist z.B. von der JP 2008154401 A bekannt.

Heutige Antriebssysteme von Traktionsfahrzeugen, insbesondere elektrisch angetriebene Schienenfahrzeuge weisen herkömmlicherweise einen oder mehrere Fahrmotoren auf, die über jeweils eine Getriebeeinheit oder direkt über eine Kupplung einen Radsatz einer Fahrwerkeinheit antreiben. Die Fahrmotoren werden meistens von einem oder mehreren Pulswechselrichtern einer Leistungsversorgungseinheit gespeist. Diese sind dazu vorgesehen, einen Strom, insbesondere einen Drehstrom für die Fahrmotoren zu erzeugen.

Der Erfindung liegt die Aufgabe zugrunde, eine gattungsgemäße Anordnung bereitzustellen, bei welcher die Fahrwerkeinheit bezüglich ihrer Funktionalitäten erweitert werden kann.

Hierzu wird eine Anordnung gemäß Anspruch 1 vorgeschlagen. Hierdurch kann für die Fahrwerkeinheit eine vorteilhafte Erweiterung ihrer Funktionalitäten erreicht werden, indem sie einen Ort für die Erzeugung elektrischer Leistung mittels zumindest einer Wechselrichtereinheit bietet.

Unter einem "Bereich der Fahrwerkeinheit" soll insbesondere ein Bereich verstanden werden, welcher - in Vertikalrichtung und relativ zur Fahrbahn betrachtet - in Höhe des Radsatzes angeordnet ist und - in einer horizontalen Richtung senkrecht zur Fahrzeugfahrtrichtung betrachtet - von zumindest einem Teil der Fahrwerkeinheit, insbesondere einem Teil des Grundkörpers begrenzt ist. Diese Begrenzung kann von einer Seite oder bevorzugt von zwei Seiten erfolgen. Bezüglich der Anordnung in Vertikalrichtung ist die Leistungsversorgungseinheit zweckmäßigerweise zumindest teilweise auf einer Höhe angeordnet, die kleiner als die maximale Radhöhe des Radsatzes ist. Zweckmäßigerweise ist zumindest ein unterster Rand der Leistungsversorgungseinheit auf einer Höhe angeordnet, die kleiner als die maximale Radhöhe des Radsatzes ist. Vorzugsweise ist die Leistungsversorgungseinheit überwiegend, insbesondere vollständig in einem Bereich angeordnet, dessen maximale Höhe kleiner als diese Radhöhe bzw. höchstens dieser entspricht. Besonders vorteilhaft kann die Leistungsversorgungseinheit zumindest teilweise in Höhe der Drehachse des Radsatzes angeordnet sein.

Unter einer "zumindest teilweisen Anordnung der Leistungsversorgungseinheit auf einer Höhe" soll verstanden werden, dass zumindest ein Teil der Leistungsversorgungseinheit auf dieser Höhe angeordnet ist.

Unter einer "Höhe" soll insbesondere eine Höhe relativ zur Fahrbahn verstanden werden, die ab einer Kontaktstelle des Radsatzes mit der Fahrbahn in Vertikalrichtung berechnet wird.

Eine Richtung, die parallel oder senkrecht zur Fahrbahn ausgerichtet wird, wird als "horizontale Richtung" bzw. "vertikale Richtung" bezeichnet. Eine horizontale Richtung, die senkrecht zur Fahrzeugfahrtrichtung ausgerichtet ist, ist "Querrichtung" genannt.

Durch die zumindest teilweise Anordnung der Leistungsversorgungseinheit in einem Bereich der Fahrwerkeinheit kann vorteilhaft ein freier Bauraum im Wagenkasten oder unter dem Wagenkasten außerhalb der Fahrwerkeinheit geschaffen werden, der anderweitig genutzt werden kann. Ein freier Bauraum im Wagenkasten kann insbesondere für eine Sitzanordnung genutzt werden. Ferner ist die erzielbare Platzeinsparung insbesondere für ein Doppelstockfahrzeug von Vorteil. Gegenüber einer Anordnung der Leistungsversorgungseinheit im Dachbereich des Fahrzeugs kann eine vorteilhafte Verschiebung des Fahrzeugschwerpunktes vertikal nach unten erreicht werden. Besonders vorteilhaft ist die Leistungsversorgungseinheit zumindest überwiegend, bevorzugt vollständig in einem Bereich der Fahrwerkeinheit angeordnet.

Es kann bezüglich einer Anordnung der Leistungsversorgungseinheit und des Fahrmotors eine besonders kompakte Bauweise erreicht werden, wenn der Fahrmotor in einem Bereich der Fahrwerkeinheit angeordnet ist. Dabei grenzen der Bereich für die Leistungsversorgungseinheit und der Bereich für den Fahrmotor vorzugsweise direkt aneinander an. Hiermit kann für die Leistungsversorgungseinheit ein Einbauort geschaffen werden, welcher in unmittelbarer Nähe des Fahrmotors angeordnet ist. Dies hat außerdem den Vorteil, dass ein Antriebsstrang umfassend die Leistungsversorgungseinheit, den Fahrmotor, eine Radsatzwelle des Radsatzes und eine mit dem Fahrmotor und der Radsatzwelle gekoppelte Getriebeeinheit in Bereichen der Fahrwerkeinheit angeordnet sein kann. Des Weiteren können kurze Kabelwege zur Verbindung der Leistungsversorgungseinheit mit dem Fahrmotor erreicht werden. Die Übertragung von Antriebsenergie vom Wagenkasten zur Fahrwerkeinheit kann ferner in der Form einer Gleichspannung erfolgen, die typischerweise von einem sogenannten Zwischenkreis bereitgestellt wird. In einer weiteren Ausführungsvariante kann die Antriebenergie vom Wagenkasten zur Fahrwerkeinheit in der Form einer mittelfrequenten Wechselspannungsversorgung erfolgen. Eine insbesondere für einen Starkstrom ausgelegte Wechselstrom-übertragung zwischen der Wechselrichtereinheit und dem Fahrmotor kann über einen äußerst kurzen Weg auf der Höhe der Fahrwerkeinheit erfolgen. Dies kann mehrere Vorteile bieten: Reduzierung der Strombelastung der Kabel gegenüber einer Lösung mit im oder am Wagenkasten angeordneter Leistungsversorgungseinheit um typischerweise 30 bis 50%, Reduzierung des zeitlichen Mittelwerts der Strombelastung bei Nahverkehrsfahrzeugen mit einem geringen Anteil an Betriebsfällen mit maximaler Traktionsleistung, kostengünstige und leichte Ausführung der Leistungsverkabelung. Insbesondere kann eine direkte flexible Leitungsverbindung zwischen dem Fahrmotor und der Wechselrichtereinheit erreicht werden, da nur geringfügige relative Bewegungen zwischen diesen Einheiten - insbesondere bei Dreh- und Wankbewegungen der Fahrwerkeinheit - auftreten können.

Die Anordnung weist eine Montageeinheit zur Montage der Leistungsversorgungseinheit auf. Die Montageeinheit kann eine von der Leistungsversorgungseinheit getrennt ausgebildete Baueinheit sein, wie z.B. eine Montageplatte oder ein Montagerahmen, an welcher die Leistungsversorgungseinheit montiert ist und die mit einem weiteren Bauteil befestigt ist.

Zwischen dem Wagenkasten und der Fahrwerkeinheit, auf welcher dieser abgestützt ist, ist herkömmlicherweise eine ein- oder meist mehrstufige Federung eingebaut, sodass der Wagenkasten deutlich geringeren Stoßbeschleunigungen sowie Dauerschwingungen ausgesetzt ist als die Fahrwerkeinheit. Somit sind - bei einer herkömmlichen Anordnung der Leistungsversorgungseinheit im Wagenkasten - die Komponenten der Leistungsversorgungseinheit, die typischerweise aus empfindlichen Halbleiterbauteilen gebildet sind, gedämpften mechanischen Beanspruchungen ausgesetzt.

Zum Schutz der Leistungsversorgungseinheit wird erfindungsgemäß vorgeschlagen, dass die Anordnung eine Federungseinheit aufweist, durch welche zumindest ein Bestanteil der Leistungsversorgungseinheit wenigstens gegenüber dem ersten Radsatz gefedert ist. Bei dem Bestandteil handelt es sich vorzugweise um Bauteile einer Leistungselektronik, insbesondere Halbleiterschaltelemente, die gegenüber Stößen und starken Beschleunigungen geschützt werden können. Die mittels der Federungseinheit erzielbare Federung kann eine Federung in Fahrtrichtung des Fahrzeugs, in Querrichtung und/oder in vertikaler Richtung sein.

In einer vorteilhaften Ausbildung der Erfindung wird vorgeschlagen, dass die Federungseinheit eine Federvorrichtung aufweist, durch welche die Montageeinheit gegenüber dem Grundkörper gefedert ist. Hierdurch kann eine zumindest teilweise Entkopplung der Montageeinheit und der mittels dieser montierten Komponenten, insbesondere der Leistungsversorgungseinheit, vom Grundkörper erreicht werden. Diese Entkopplung erfolgt zweckmäßigerweise in Fahrtrichtung des Fahrzeugs, in einer horizontalen, dazu senkrechten Querrichtung und/oder in Vertikalrichtung. Durch diese zumindest teilweise Entkopplung der Montageeinheit vom Grundkörper können Stoßbeschleunigungen der Montageeinheit gegenüber den restlichen Teilen der Fahrwerkeinheit deutlich reduziert werden. Insbesondere können diese Stoßbeschleunigungen unter einem für die Wechselrichtereinheit kritischen Grenzwert von ca. 5g gehalten werden. Dieser Wert ist insbesondere durch den typischen Aufbau der Wechselrichtereinheit mit einer empfindlichen Leistungselektronik, insbesondere mit Halbleiterschaltelementen, bedingt. Die zumindest teilweise Entkopplung bietet außerdem den Vorteil einer Verminderung von Schwingungen, die in Vertikal- und Querrichtung auftreten können. Durch die vorgeschlagene gefederte Verbindung der Montageeinheit - und daher der Leistungsversorgungseinheit - mit dem Grundkörper über die Federvorrichtung kann des Weiteren eine vorteilhafte Stabilisierung der Fahrwerkeinheit erreicht werden.

Die Federvorrichtung verbindet vorzugsweise einen oder mehrere Abschnitte der Montageeinheit mit einem bzw. mehreren Abschnitten des Grundkörpers. Hierzu weist die Federvorrichtung ein bzw. mehrere Federelemente auf, die in einem Bereich der Fahrwerkeinheit angeordnet sind.

Ist der Grundkörper selbst gegenüber dem Radsatz gefedert, kann eine zweistufige Federung der Leistungsversorgungseinheit gegenüber dem Radsatz erreicht werden. Die Federung des Grundkörpers gegenüber dem Radsatz - auch "Primärfederung" genannt - bildet zusammen mit der vorgeschlagenen Federvorrichtung eine Ausführung der Federungseinheit, durch welche die Leistungsversorgungseinheit gegenüber dem ersten Radsatz besonders effizient gefedert ist.

Besonders vorteilhaft bilden die Federvorrichtung und die Leistungsversorgungseinheit Bestandteile einer Schwingungstilgereinheit. Diese dient zweckmäßigerweise dazu, Schwingungsamplituden des Grundkörpers in einem bestimmten, kritischen Frequenzbereich zu begrenzen. Die auf diese Begrenzung abgestimmten Massen werden vorteilhaft zumindest von der Leistungsversorgungseinheit in Kombination mit weiteren Komponenten gebildet, die zweckmäßigerweise an der Montageeinheit montiert sind.

In einer vorteilhaften Weiterbildung der Erfindung wird vorgeschlagen, dass der erste Fahrmotor an der Montageeinheit montiert ist. Dadurch kann eine konstruktiv einfache Ausführung der Anordnung erreicht werden. Insbesondere können der Fahrmotor und die Leistungsversorgungseinheit an einem gemeinsamen, durch die Montageeinheit gebildeten Geräteträger montiert werden. Vorzugsweise ist dieser Geräteträger als zusammenhängendes, insbesondere einstückiges Bauteil ausgebildet. Ist die Montageeinheit mittels der Federvorrichtung gegenüber dem Grundkörper gefedert, kann diese Federvorrichtung zusätzlich eine zumindest teilweise Entkopplung des Fahrmotors vom Grundkörper bewirken. Dabei können der Fahrmotor und die Leistungsversorgungseinheit gemeinsam mittels der Federvorrichtung vom Grundkörper zumindest teilweise entkoppelt werden.

Ist die Anordnung mit zumindest einem zweiten Fahrmotor ausgebildet, kann dieser vorteilhaft an der Montageeinheit montiert sein.

Durch eine Montage des ersten und/oder zweiten Fahrmotors und der Leistungsversorgungseinheit an der Montageeinheit kann - wenn diese mittels der Federvorrichtung gegenüber dem Grundkörper gefedert ist - ein als Schwingungstilgereinheit dienendes Gebilde bereitgestellt werden, dessen Bestandteile zumindest die Federvorrichtung, die Montageeinheit, die Leistungsversorgungseinheit und der erste und/oder zweite Fahrmotor sind. Hierdurch können konstruktiv einfach Komponenten des Antriebsstrangs als Tilgermassen dienen. Es kann hiermit in der Summe eine hohe Tilgermasse erreicht werden, wodurch sich eine besonders effiziente Dämpfung von Schwingungen des Grundkörpers und damit ein verbessertes Laufverhalten der Fahrwerkeinheit ergeben können. Diese Verbesserungen können dabei erreicht werden, ohne dass sich die gesamte Fahrzeugmasse erhöht, da zur Stabilisierung der Fahrwerkeinheit der Einsatz von zusätzlichen, in herkömmlichen Fahrzeugen nicht vorhandenen Massen vermieden werden kann.

Mittels des ersten und/oder zweiten Fahrmotors kann des Weiteren besonders vorteilhaft eine rotierende Masse als Tilgermasse eingesetzt werden.

In einer weiteren Ausführungsform der Erfindung wird vorgeschlagen, dass die Montageeinheit vom Grundkörper getragen wird. Darunter soll insbesondere verstanden werden, dass die Gewichtskraft der Montageeinheit und der an ihr montierten Komponenten auf den Grundkörper übertragen wird. Dies kann vorteilhaft zu einer gesteigerten Stabilität der Fahrwerkeinheit, insbesondere aufgrund einer erhöhten Trägheit, führen.

Beispielsweise kann die Montageeinheit am Grundkörper aufgehängt sein. Dabei kann eine vorteilhafte Kombination einer Trag- und Federfunktion erreicht werden, wenn die Montageeinheit mittels der Federvorrichtung am Grundkörper aufgehängt ist.

Ferner wird vorgeschlagen, dass die Leistungsversorgungseinheit - zumindest in Fahrtrichtung des Fahrzeugs betrachtet - zumindest teilweise in einem Mittelbereich der Fahrwerkeinheit angeordnet ist. Durch diese relativ zur Fahrwerkeinheit mittige Anordnung der Leistungsversorgungseinheit kann ein vorteilhafter - möglichst vertikaler - Verlauf von Kabelverbindungen zwischen der Leistungsversorgungseinheit und dem Wagenkasten erreicht werden. Außerdem kann ein hoher Schutz dieser Kabelverbindungen, insbesondere gegen Steinschläge, erzielt werden. Ist die Fahrwerkeinheit mit einem Drehzapfen ausgebildet, umgibt der Mittelberich den Drehzapfen unmittelbar.

Weist die Fahrwerkeinheit zumindest einen zweiten, auf der Fahrbahn gestützten Radsatz auf, wird vorgeschlagen, dass die Leistungsversorgungseinheit - in Fahrtrichtung des Fahrzeugs - zwischen den Radsätzen angeordnet ist. Insbesondere kann ein Bauraum im Mittelbereich der Fahrwerkeinheit einfach für die zumindest teilweise Anordnung der Leistungsversorgungseinheit genutzt werden, wenn dieser zweite Radsatz als Laufradsatz - d.h. antriebsloser Radsatz - ausgebildet ist.

Des Weiteren wird vorgeschlagen, dass der Grundkörper ein Paar von parallelen, in Fahrtrichtung des Fahrzeugs ausgerichteten Längsträgern aufweist und die Leistungsversorgungseinheit - in Querrichtung - zumindest teilweise zwischen den Längsträgern angeordnet ist. Hierdurch kann eine bezüglich der Querrichtung mittige Anordnung der Leistungsversorgungseinheit in der Fahrwerkeinheit erreicht werden, wodurch insbesondere ein vorteilhafter Schutz der Leistungsversorgungseinheit erreicht werden kann.

In einer weiteren vorteilhaften Ausbildung der Erfindung wird vorgeschlagen, dass die Anordnung zumindest eine Bremsvorrichtung, die der Fahrwerkeinheit zugeordnet ist, und eine zur Steuerung der Bremsvorrichtung vorgesehene Steuereinheit aufweist, die zumindest teilweise in einem Bereich der Fahrwerkeinheit angeordnet ist. Hierbei können kurze Steuerleitungen der Bremssteuerung zu den Bremselementen erreicht werden.

Ferner wird vorgeschlagen, dass die Anordnung eine Sensoreinheit, die zur Erfassung zumindest einer Kenngröße der Fahrwerkeinheit dient, und eine Auswerteeinheit zur Auswertung der Kenngröße aufweist, die zumindest teilweise in einem Bereich der Fahrwerkeinheit angeordnet ist. Hierdurch können kurze Leitungen zwischen den Elementen der Sensoreinheit und der Auswerteeinheit erreicht werden. Unter einer "Kenngröße der Fahrwerkeinheit" soll eine Kenngröße verstanden werden, die die Fahreigenschaften der Fahrwerkeinheit charakterisiert. Die Kenngröße kann eine Temperatur-, Geschwindigkeit-, Beschleunigung-, Schwingungskenngröße usw. sein.

Zweckmäßigerweise ist die Steuereinheit und/oder die Auswerteeinheit zumindest teilweise Bestandteil der Leistungsversorgungseinheit, wodurch Bauraum und Bauteile eingespart werden können.

Ausführungsbeispiele der Erfindung werden anhand der Zeichnungen erläutert. Es zeigen:
- Figur 1:: eine Anordnung mit einer Fahrwerkeinheit in einer Seitenansicht,
- Figur 2:: die Anordnung aus Figur 1 in seiner Draufsicht von oben,
- Figur 3:: eine an der Fahrwerkeinheit angebrachte Montageeinheit in einer perspektivischen Ansicht,
- Figur 4:: eine alternative Ausführung der Anordnung aus Figur 2,
- Figur 5:: die Anordnung aus Figur 1 oder Figur 4 und einen Wagenkasten,
- Figur 6:: eine alternative Anbindung der Anordnung mit dem Wagenkasten und
- Figur 7:: eine Ausführung der Anordnung mit einem Jakobsdrehgestell.

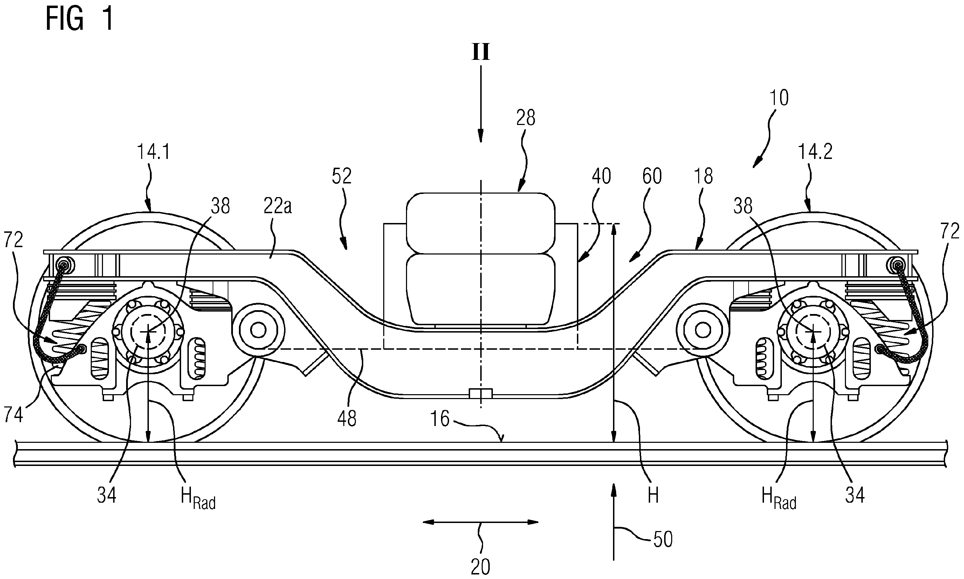

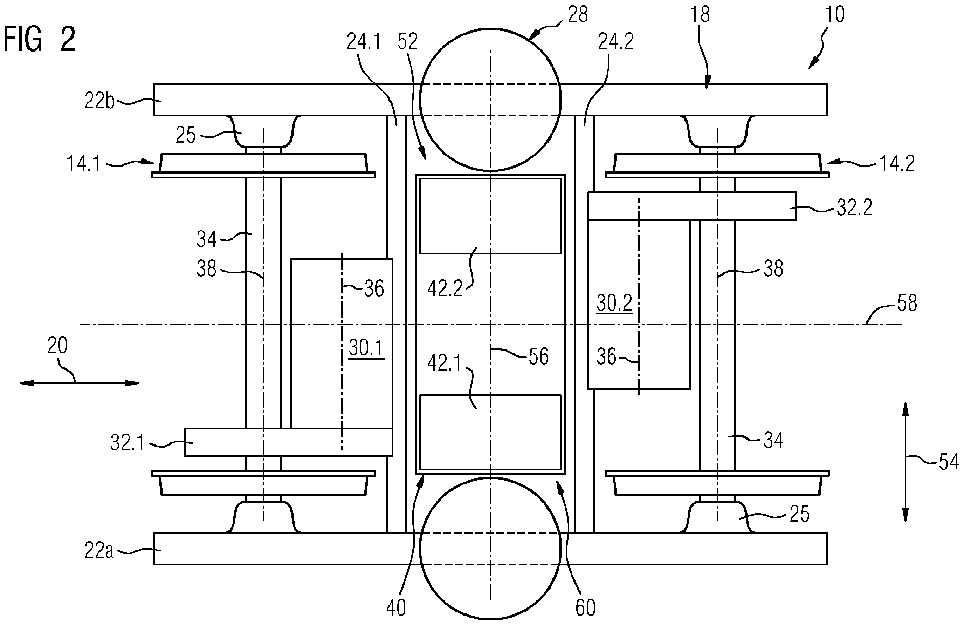

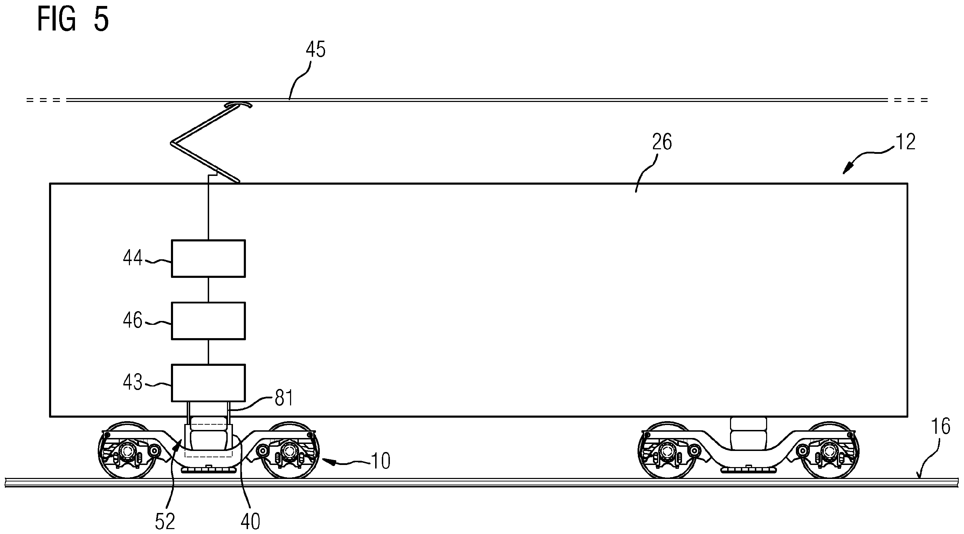

Figur 1 zeigt eine Anordnung mit einer Fahrwerkeinheit 10 für ein in Figur 5 gezeigtes Schienenfahrzeug 12 in einer Seitenansicht. Die Anordnung ist in Figur 2 in einer Draufsicht von oben dargestellt.

Die Fahrwerkeinheit 10 ist im betrachteten Ausführungsbeispiel als eine Drehgestelleinheit ausgebildet, die zwei Radsätze 14.1, 14.2 aufweist. Die Radsätze 14 sind auf einer Fahrbahn 16 gestützt, die von Schienen gebildet ist. Die Fahrwerkeinheit 10 weist ferner einen Grundkörper 18 auf, der sich auf den Radsätzen 14 abstützt. Der Grundkörper 18 ist in der fachmännischen Sprache als "Fahrwerkrahmen" genannt und weist zwei zueinander parallele, sich in Fahrtrichtung 20 des Schienenfahrzeugs 12 erstreckenden Längsträger 22a, 22b auf, die mittels zwei zur Fahrtrichtung 20 senkrecht ausgerichteten, horizontalen Querträgern 24.1, 24.2 miteinander verbunden sind. Die Lagerung der Radsätze 14 am Grundkörper 18 erfolgt mittels Radsatzlagern 25.

Bei der Herstellung des Schienenfahrzeugs 12 wird die Fahrwerkeinheit 10 mit einem Wagenkasten 26 des Schienenfahrzeugs 12 mechanisch gekoppelt. Hierzu weist die Fahrwerkeinheit 10 eine Kopplungseinrichtung 28 auf, die wie weiter unten näher erläutert Gasdruckfedern, insbesondere Luftfedern, umfasst.

Die Fahrwerkeinheit 10 ist ferner als angetriebene Fahrwerkeinheit, insbesondere als angetriebene Drehgestelleinheit ausgebildet. Die Anordnung weist dabei zwei Fahrmotoren 30.1, 30.2 auf, die jeweils zum Antreiben einer der Radsätze 14.1 bzw. 14.2 vorgesehen sind. Die Fahrmotoren 30.1, 30.2 sind in Figur 2 zu sehen. In der gezeigten Ausführung sind die Fahrmotoren 30 jeweils seitlich neben der Radsatzwelle 34 des zugeordneten Radsatzes 14 angeordnet und mittels einer Getriebeeinheit 32.1 bzw. 32.2 mit dem zugeordneten Radsatz 14.1 bzw. 14.2 antriebstechnisch gekoppelt. Hierbei weisen die Fahrmotoren 30 jeweils eine Motorachse 36 auf, die seitlich neben der Radsatzwelle 34 angeordnet und parallel zur Drehachse 38 des entsprechenden Radsatzes 14 ausgerichtet ist. In einer weiteren Ausführungsvariante kann zumindest einer der Fahrmotoren 30 die Radsatzwelle 34 umfassen, wobei die Motorachse 36 mit der Drehachse 38 des entsprechenden Radsatzes 14 übereinstimmt. Allgemein kann die antriebstechnische Kopplung der Fahrmotoren 30 mit der jeweiligen Radsatzwelle 34 alternativ zu einer Getriebeeinheit mittels einer Kupplungseinrichtung erfolgen.

Zur Versorgung der Fahrmotoren 30 mit elektrischer Leistung ist die Anordnung mit einer Leistungsversorgungseinheit 40 versehen. Diese weist zwei Wechselrichtereinheiten 42.1, 42.2 auf, die jeweils einem Fahrmotor 30.1 bzw. 30.2 zugeordnet und dazu vorgesehen sind, ausgehend von einer bereitgestellten Gleichspannung, einen elektrischen Wechselstrom für den zugeordneten Fahrmotor 30.1 bzw. 30.2 zu erzeugen. Diese Gleichspannung ist insbesondere eine in einem sogenannten Zwischenkreis 43 bereitgestellte Spannung, der entweder direkt von einer eine Gleichspannung führenden Bahnnetzversorgung oder von einer Spannungsumwandlungseinheit gespeist wird, die zum Umwandeln einer von einer Bahnnetzversorgung 45 bereitgestellten Wechselspannung dient. Die Spannungsumwandlungseinheit weist hierzu zumindest einen Transformator 44 und eine Gleichrichtereinheit 46 auf, die in einem Wagenkasten 26 des Schienenfahrzeugs 12 angeordnet sind (siehe Figur 5). Die Darstellung der Spannungsumwandlungseinheit und des Zwischenkreis 43 und deren Anordnung im Wagenkasten 26 gemäß Figur 5 sind stark schematisch.

In der betrachteten Ausführung sind die Fahrmotoren 30 jeweils als Asynchronmaschinen, insbesondere als Drehstromasynchronmaschinen ausgebildet. In einer Variante der betrachteten Ausführung mit zwei Wechselrichtereinheiten 42 können Drehstromsynchronmaschinen vorgesehen sein. Die Wechselrichtereinheiten 42 sind jeweils als Pulswechselrichter ausgeführt, die den für den jeweiligen Fahrmotor 30 notwendigen Strom, insbesondere Drehstrom, gemäß einem zu erzeugenden Antriebsmoment erzeugen. Sie weisen auf bekannte Weise Schaltelemente auf, die insbesondere als Halbleiterbauteile ausgebildet sind. Insbesondere sind diese Schaltelemente als IGBT (oder "Insulated Gate Bipolar Transistor") ausgeführt. In einer alternativen Ausführung ist denkbar, dass beide Fahrmotoren 30 von einer gemeinsamen Wechselrichtereinheit 42 speisbar sind.

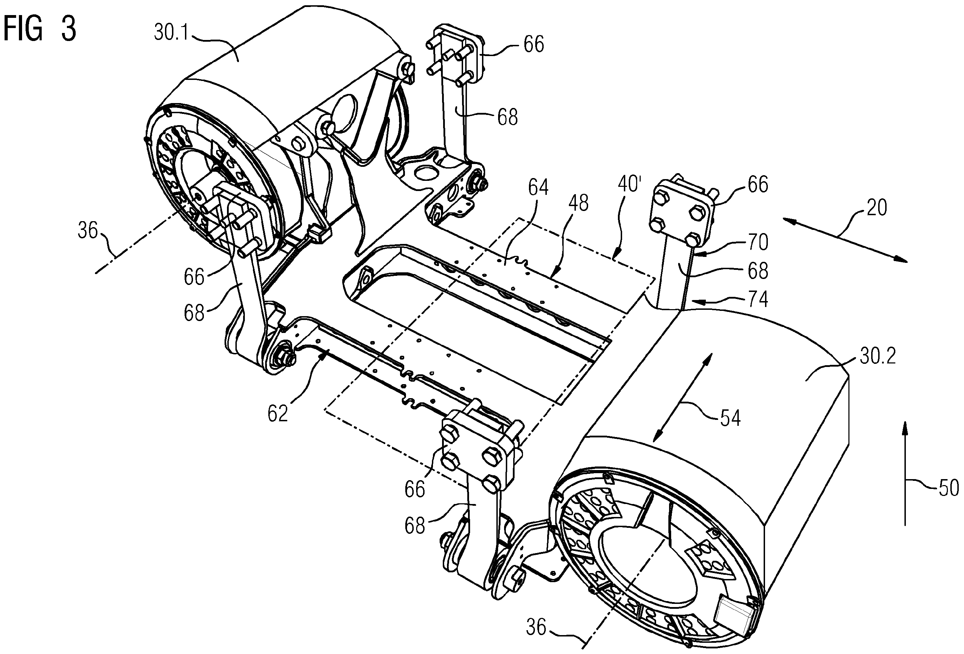

Die Anordnung weist des Weiteren eine Montageeinheit 48 auf, an welcher die Leistungsversorgungseinheit 40 montiert ist. Diese ist in den Figuren 1 und 3 zu sehen. Figur 3 zeigt die Montageeinheit 48, den für die Leistungsversorgungseinheit 40 vorgesehenen Einbauort 40' und die Fahrmotoren 30 in einer perspektivischen Ansicht. Der Übersichtlichkeit halber wird auf eine vollständige Darstellung der Leistungsversorgungseinheit 40 in Figur 3 verzichtet.

Wie insbesondere den Figuren 1 und 2 zu entnehmen, ist die Leistungsversorgungseinheit 40 in einem Bereich 52 der Fahrwerkeinheit 10 angeordnet. Die Anordnung der Leistungsversorgungseinheit 40 im betrachteten Ausführungsbeispiel wird unten für jede Raumrichtung näher erläutert:
Im Hinblick auf die Anordnung der Leistungsversorgungseinheit 40 in vertikaler Richtung 50 ist diese zumindest teilweise in Höhe der Radsatzwellen 34 angeordnet (siehe Figur 1). Darunter soll verstanden werden, dass zumindest ein Teil der Leistungsversorgungseinheit 40 auf dieser Höhe angeordnet ist. Diese in Figur 1 als "H_{Rad}" bezeichnete Höhe entspricht der Höhe der Drehachse 38 relativ zur Fahrbahn 16.

Der Figur 3 kann zur Höhe der Leistungsversorgungseinheit 40 das Merkmal entnommen werden, dass sich diese in Höhe der Fahrmotoren 30 befindet. Insbesondere ist zumindest ein Teil der Leistungsversorgungseinheit 40 auf der Höhe der Motorachsen 36 angeordnet.

Die Anordnung der Leistungsversorgungseinheit 40 - weiterhin in vertikaler Richtung 50 betrachtet - kann außerdem dadurch charakterisiert werden, dass sie zumindest teilweise in Höhe des Grundkörpers 18 der Fahrwerkeinheit 10 angeordnet ist. Alternativ formuliert ist der Bereich 52, in welchem die Leistungsversorgungseinheit 40 angeordnet ist - in Querrichtung 54, d.h. in Längsrichtung der Radsatzwellen 34 betrachtet - zumindest von einem Teil des Grundkörpers 18, insbesondere von einem Längsträger 22 begrenzt.

Das oberste Ende der Leistungsversorgungseinheit 40 weist des Weiteren eine Höhe H in vertikaler Richtung 50 relativ zur Fahrbahn 16 auf, die geringer als die maximale Radhöhe der Radsätze 14 ist und maximal dieser entspricht. Im gekoppelten Zustand der Fahrwerkeinheit 10 mit dem Wagenkasten 26 befindet sich daher die Leistungsversorgungseinheit 40 - weiterhin in vertikaler Richtung 50 betrachtet - zwischen dem Wagenkasten 26 und der Fahrbahn 16.

Bezüglich der Anordnung der Leistungsversorgungseinheit 40 in Fahrtrichtung 20 wird diese dadurch charakterisiert, dass die Leistungsversorgungseinheit 40 zwischen den Radsätzen 14.1, 14.2 angeordnet ist. Die Leistungsversorgungseinheit 40 ist daher- in Fahrtrichtung 20 betrachtet - in einem Mittelbereich 60 der Fahrwerkeinheit 10 angeordnet. Insbesondere steht die Leistungsversorgungseinheit 40 auf der in Querrichtung 54 ausgerichteten Mittelachse 56 der Fahrwerkeinheit 10.

Den Figuren 2 und 3 kann außerdem das Merkmal entnommen werden, dass die Leistungsversorgungseinheit 40 - weiterhin in Fahrtrichtung 20 betrachtet - zwischen den Fahrmotoren 30 angeordnet ist.

Hinsichtlich der Anordnung der Leistungsversorgungseinheit 40 in Querrichtung 54 ist sie zwischen den Längsträgern 22a, 22b angeordnet (siehe Figur 2). Die Wechselrichtereinheiten 42.1, 42.2 sind beidseitig der in Fahrtrichtung 20 ausgerichteten Mittelachse 58 der Fahrwerkeinheit 10 angeordnet. Dies ist insbesondere für eine Ausführung der Fahrwerkeinheit 10 mit einem mittigen Drehzapfen (nicht dargestellt) geeignet.

Die Montageeinheit 48, die in Figur 3 detailliert dargestellt ist, weist einen Montagerahmen 62 auf. Die Fahrmotoren 30 sind an den - in Fahrtrichtung 20 betrachtet - beiden Enden des Montagerahmens 62 fest abgestützt. Zwischen diesen Enden ist ein Mittelbereich des Montagerahmens 62 vorhanden, der insbesondere zwei zueinander parallele Längsträger 64 aufweist, an welchen die Leistungsversorgungseinheit 40 angebracht und befestigt ist. Anstelle dieser Längsträger 64 könnte eine Trägerplatte vorgesehen sein.

Die Montageeinheit 48 ist in der betrachteten Ausführung am Grundkörper 18 montiert. Hierzu sind Befestigungseinheiten 66 vorgesehen, die am Grundkörper 18 oder an einem mit dem Grundkörper 18 starr verbundenen Bauteil befestigt sind. Die Montageeinheit 48 ist mittels Verbindungselementen 68 mit den Befestigungseinheiten 66 verbunden. Diese Verbindungselemente 68 erstrecken sich ausgehend von der jeweiligen Befestigungseinheit 66 vertikal nach unten, sodass sich die Montageeinheit 48 gegenüber dem Grundkörper 18 in einer hängenden Position befindet. Anders formuliert ist die Montageeinheit 48 mittels der Befestigungseinheiten 66 und der vertikalen Verbindungselemente 68 am Grundkörper 18 aufgehängt. Die Gewichtskraft der Montageeinheit 48 und der an ihr montierten Komponenten wird über die Verbindungselemente 68 und die Befestigungseinheiten 66 auf den Grundkörper 18 übertragen, welcher dann die Funktion eines Tragkörpers für die Montageeinheit 48 und die zugehörigen Komponenten hat.

Bei einer Wartung oder zu einem Austausch von Komponenten des Antriebsstrangs kann die Montageeinheit 48 vom Grundkörper 18 gelöst und nach unten aus der Fahrwerkeinheit 10 ausgebaut werden.

In der betrachteten Ausführung ist die Leistungsversorgungseinheit 40 folgendermaßen gegenüber den Radsätzen 14 gefedert. Zur Federung weist die Anordnung eine Federvorrichtung 70 auf, durch welche die Montageeinheit 48 gegenüber dem Grundkörper 18 gefedert ist. Die Federvorrichtung 70 umfasst hierzu die Verbindungselementen 68, die jeweils als Feder ausgebildet sind. In der betrachteten Ausführung sind diese als Blattfeder ausgebildet. Die Verbindungselemente 68 dienen zur zumindest teilweisen Entkopplung der Montageeinheit 48 - und daher der Leistungsversorgungseinheit 40 und der Fahrmotoren 30 - vom Grundkörper 18. Diese Entkopplung erfolgt in der betrachteten Ausführung im Wesentlichen in Querrichtung 54. In weiteren, an einen jeweiligen Bedarf angepassten Ausführungen können die Verbindungselemente 68 zur Ausführung einer im Wesentlichen in vertikaler Richtung 50 erfolgenden Federung vorgesehen sein, wobei die Federvorrichtung 70 Federelemente bei Bedarf aufweisen kann, die zur Federung der Montageeinheit 48 in Querrichtung 54 und/oder in Fahrtrichtung 20 vorgesehen sind. Der Grundkörper 18 ist selbst mittels einer Primärfedereinheit 72 gegenüber den Radsätzen 14 gefedert (siehe Figur 1). Die Federvorrichtung 70 und die Primärfedereinheit 72 bilden demnach eine Federungseinheit 74, durch welche die Montageeinheit 48 und daher insbesondere die Leistungsversorgungseinheit 40 gegenüber den Radsätzen 14 gefedert sind. Die Federvorrichtung 70 bildet eine Verbindung zwischen dem Grundkörper 18 und der Montageeinheit 48, die von der Sekundärfedereinheit unterschiedlich ist.

Die Montageeinheit 48, die an ihr montierten Komponenten - insbesondere Leistungsversorgungseinheit 40 und Fahrmotoren 30 - und die Federvorrichtung 70 bilden hinsichtlich von Schwingungen der Fahrwerkeinheit 10 eine Schwingungstilgereinheit. Die Tilgermassen werden dabei im Wesentlichen von den Fahrmotoren 30 und der Leistungsversorgungseinheit 40 gebildet. Es können bei Bedarf zusätzliche Massen vorgesehen werden, die starr mit der Montageeinheit 48 gekoppelt sind. Die Schwingungstilgereinheit weist rotierende Tilgermassen auf, die jeweils von den Fahrmotoren 30 gebildet sind.

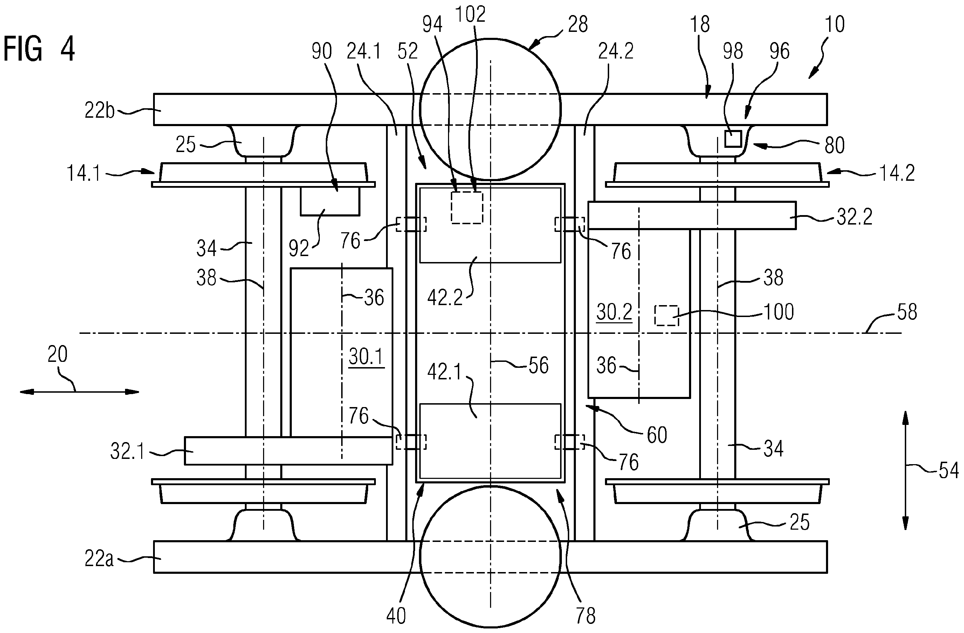

Ein weiteres Ausführungsbeispiel ist in Figur 4 dargestellt. Diese entspricht im Wesentlichen der Darstellung der Figur 2, wobei sich der folgende Text auf die Unterschiede zur Ausführung gemäß den Figuren 1 bis 3 beschränkt. Es werden außerdem die Bezugszeichen der oben beschriebenen Ausführung beibehalten.

Die Ausführung gemäß Figur 4 unterscheidet sich von der vorherigen Ausführung dadurch, dass die Leistungsversorgungseinheit 40 mit dem Grundkörper 18 starr verbunden ist. Beispielsweise kann dies mittels Befestigungselementen 76 erfolgen, durch welche eine Montageeinheit 78 an den Querträgern 24.1, 24.2 befestigt ist. Die Montageeinheit 78 ist in der betrachteten Ausführung durch eine Gehäuseeinheit der Leistungsversorgungseinheit 40 gebildet, beispielweise durch Gehäuse der Wechselrichtereinheiten 42. Alternativ oder zusätzlich kann eine von der Leistungsversorgungseinheit 40 getrennt ausgeführte Montageeinheit vorgesehen sein, an welcher die Leistungsversorgungseinheit 40 starr montiert ist und welche an dem Grundkörper 18, insbesondere an den Querträgern 24 befestigt ist. In dieser Ausführung ist die Leistungsversorgungseinheit 40 mittels der Primärfedereinheit 72 gegenüber den Radsätzen 14 gefedert. Diese bildet daher eine Federungseinheit 80, durch welche die Leistungsversorgungseinheit 80 gegenüber den Radsätzen 14 gefedert ist.

Figur 5 zeigt das Schienenfahrzeug 12 mit einem Wagenkasten 26, welcher mittels der Fahrwerkeinheit 10 auf der Fahrbahn 16 abgestützt ist. Die Fahrwerkeinheit 10 kann dabei in der Ausführung gemäß den Figuren 1 bis 3 oder in der Ausführung gemäß Figur 4 ausgebildet sein. Die Verbindung zwischen dem Zwischenkreis 43 und der Leistungsversorgungseinheit 40 erfolgt mittels Kabelverbindungen 81, die eine Gleichspannung führen. Ein Kabelweg, über welchen ein von der Leistungsversorgungseinheit 40 erzeugter Wechselstrom zu den Fahrmotoren 30 geführt wird, ist ausschließlich innerhalb der Fahrwerkeinheit 10 vorhanden und ist dementsprechend kurz ausgebildet. Neben den Kabelverbindungen 81 können auch eine Wasserkühlungsleitung und/oder Steuerleitungen vom Wagenkasten 26 zur Fahrwerkeinheit 10 geführt sein (nicht gezeigt).

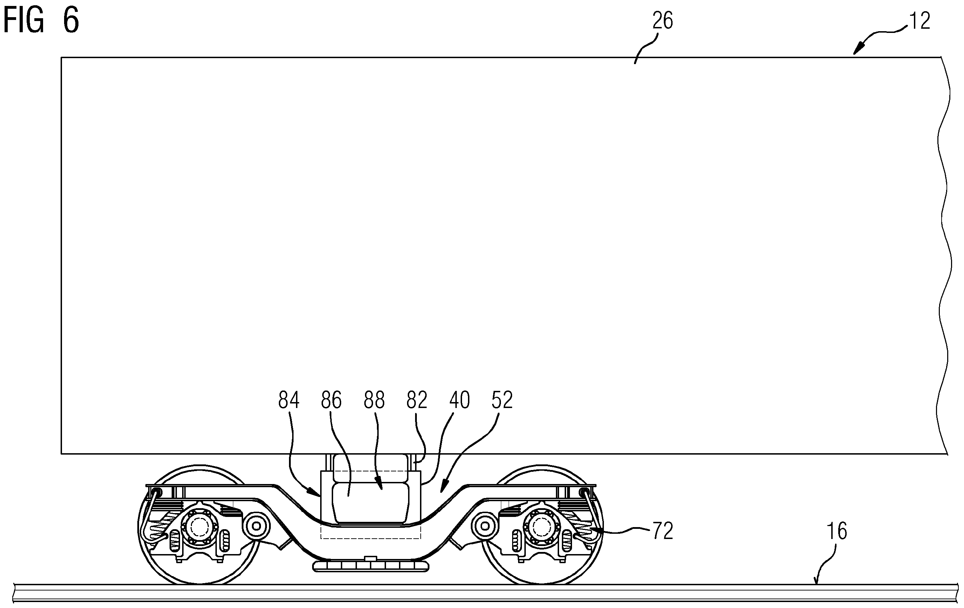

In Figur 6 ist ein weiteres Ausführungsbeispiel der Erfindung dargestellt. Diese Figur zeigt den Wagenkasten 26 und die mit diesem gekoppelte Fahrwerkeinheit 10. Der folgende Text ist auf die Unterschiede zu den Ausführungen gemäß den Figuren 1 bis 3 und gemäß der Figur 4 beschränkt. Es werden außerdem die Bezugszeichen der oben beschriebenen Ausführungen beibehalten. Die Ausführung gemäß Figur 6 unterscheidet sich dadurch, dass die Leistungsversorgungseinheit 40 vom Wagenkasten 26 getragen wird. Beispielsweise kann dies mittels Befestigungselementen 82 erfolgen, durch welche eine Montageeinheit 84 am Wagenkasten 26 befestigt ist. Die Montageeinheit 84 ist in der betrachteten Ausführung durch eine Gehäuseeinheit der Leistungsversorgungseinheit 40 gebildet, beispielweise durch Gehäuse der Wechselrichtereinheiten 42. Alternativ oder zusätzlich kann eine von der Leistungsversorgungseinheit 40 getrennt ausgeführte Montageeinheit vorgesehen sein, an welcher die Leistungsversorgungseinheit 40 starr montiert ist und welche mit dem Wagenkasten 26 befestigt ist. Die Befestigungselemente 82 erstrecken sich ausgehend von einem Ankupplungspunkt am Wagenkasten 26 vertikal nach unten, sodass sich die Montageeinheit 84 gegenüber dem Wagenkasten 26 in einer hängenden Position befindet. Anders formuliert ist die Montageeinheit 84 mittels der Befestigungselemente 82 am Wagenkasten 26 aufgehängt. Mittels der Befestigungselemente 82 wird die Gewichtskraft der Montageeinheit 84 und der an ihr montierten Komponenten auf den Wagenkasten 26 übertragen. Bezüglich der Position der Leistungsversorgungseinheit 40 relativ zur Fahrwerkeinheit 10 wird auf die obigen Ausführungen verwiesen.

In dieser Ausführung ist die Leistungsversorgungseinheit 40 mittels der Primärfedereinheit 72 und mittels einer Sekundärfedereinheit 86 gegenüber den Radsätzen 14 gefedert. Die Sekundärfedereinheit 86 hat die Funktion, den Wagenkasten 26 gegenüber dem Grundkörper 18 der Fahrwerkeinheit 10 zu federn. Sie weist Gasdruckfedern, insbesondere Luftfedern, die wie oben beschrieben Bestandteil der Kopplungseinrichtung 28 bilden. Die Primärfedereinheit 72 und die Sekundärfedereinheit 86 bilden eine Federungseinheit 88, durch welche die Leistungsversorgungseinheit 40 gegenüber den Radsätzen 14 gefedert ist. Die Federungseinheit 88 kann zusätzlich eine weitere Federeinrichtung aufweisen, die die Montageeinheit 84 gegenüber dem Wagenkasten 26 federt.

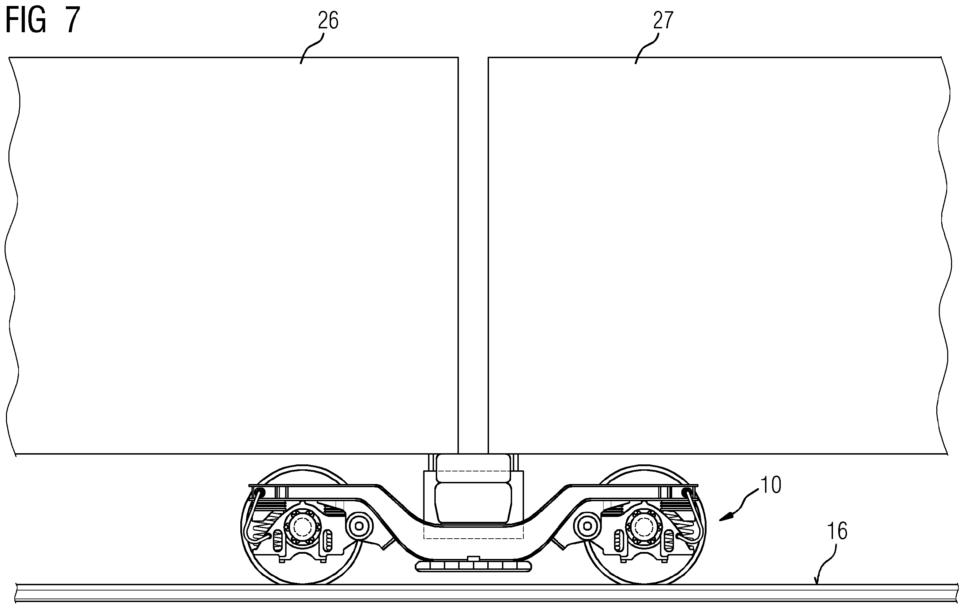

Figur 7 zeigt ein weiteres Ausführungsbeispiel der Erfindung. Der folgende Text ist auf die Unterschiede zu den Ausführungen gemäß den Figuren 1 bis 6 beschränkt. Es werden außerdem die Bezugszeichen der oben beschriebenen Ausführungen beibehalten. Die Ausführung gemäß Figur 7 unterscheidet sich dadurch, dass zwei Wagenkästen 26 und 27 auf der Fahrwerkeinheit 10 abgestützt sind. Die Fahrwerkeinheit 10 ist in dieser Ausführung als Jakobsdrehgestell ausgeführt.

Mit Bezug auf Figur 4 werden bremssteuerungstechnische und sensortechnische Aspekte der Erfindung beschrieben.

Die Anordnung weist eine der Fahrwerkeinheit 10 zugeordnete Bremsvorrichtung 90 auf, die einerseits von einer mit den Radsätzen 14.1, 14.2 gekoppelten mechanischen Bremseinheit 92 und andererseits von den Fahrmotoren 30.1, 30.2 gebildet ist. Der Übersichtlichkeit halber ist in Figur 2 lediglich ein Bremselement der mechanischen Bremseinheit 92 dargestellt. Zur Steuerung der Bremsvorrichtung 90 ist eine Steuereinheit 94 vorgesehen, die im Bereich 52 der Fahrwerkeinheit 10 angeordnet ist. Diese Steuereinheit 94 ist insbesondere als Bestandteil der Leistungsversorgungseinheit 40 ausgebildet. Die Steuereinheit 94 kann von einer Steuervorrichtung gebildet sein, die zur Steuerung zumindest einer Wechselrichtereinheit 42 dient.

Außerdem weist die Anordnung eine Sensoreinheit 96 auf, die zur Erfassung zumindest einer Kenngröße der Fahrwerkeinheit 10 dient. In der Figur sind beispielhaft ein Temperatursensor 98 und ein Drehzahlgeber 100 dargestellt, wobei weitere Sensoren vorgesehen sein können. Zur Auswertung der von der Sensoreinheit 96 erfassten Kenngrößen ist eine Auswerteeinheit 102 vorgesehen, die im Bereich 52 der Fahrwerkeinheit 10 angeordnet ist. Insbesondere ist die Auswerteeinheit 102 als Bestandteil der Leistungsversorgungseinheit 40 ausgebildet. Beispielweise kann die Auswerteeinheit 102 von der Steuereinheit 94 gebildet sein, wie in der Zeichnung gezeigt.

Ferner sind Verbindungen (nicht gezeigt) vorgesehen, durch welche die Bremsvorrichtung 90 bzw. die Sensoreinheit 96 mit der zugeordneten Steuereinheit 94 bzw. Auswerteeinheit 102 verbunden sind. In der betrachteten Ausführung erfolgen diese Verbindungen zwischen der Bremsvorrichtung 90 bzw. der Sensoreinheit 96 und der Leistungsversorgungseinheit 40 und können über besonders kurze Wege erfolgen.

Die oben auf der Grundlage von Figur 4 erläuterten bremssteuerungstechnischen und sensortechnischen Aspekte der Erfindung können ebenfalls in der Ausführung gemäß Figur 2 zur Anwendung kommen.

## Patentansprüche

1. Anordnung für ein Fahrzeug (12), insbesondere ein Schienenfahrzeug, welche
- eine Fahrwerkeinheit (10) mit zumindest einem ersten, auf einer Fahrbahn (16) gestützten Radsatz (14.1, 14.2) und einem auf dem ersten Radsatz (14.1, 14.2) gestützten Grundkörper (18), welcher eine Kopplungseinrichtung (28) zur mechanischen Kopplung mit zumindest einem Wagenkasten (26; 27) des Fahrzeugs (12) umfasst,
- zumindest einen ersten Fahrmotor (30.1, 30.2), der zum Antreiben des ersten Radsatzes (14.1, 14.2) vorgesehen ist,
- wenigstens eine Leistungsversorgungseinheit (40), die zur Versorgung des Fahrmotors (30.1, 30.2) mit elektrischer Leistung vorgesehen ist und zumindest eine Wechselrichtereinheit (42.1, 42.2) umfasst, wobei zumindest ein Bestandteil der Leistungsversorgungseinheit (40) in einem Bereich (52) der Fahrwerkeinheit (10) angeordnet ist,
**gekennzeichnet durch**
- eine Montageeinheit (48; 78; 84) zur Montage des zumindest einen Bestandteils der Leistungsversorgungseinheit (40), und
- eine Federungseinheit (74; 80; 88), durch welche der zumindest eine Bestandteil der Leistungsversorgungseinheit (40) wenigstens gegenüber dem ersten Radsatz (14.1, 14.2) gefedert ist, wobei die Federungseinheit (74) eine Federvorrichtung (70) aufweist, durch welche die Montageeinheit (48) gegenüber dem Grundkörper (18) gefedert ist.

2. Anordnung nach Anspruch 1,
**dadurch gekennzeichnet, dass**
die Federvorrichtung (70) und die Leistungsversorgungseinheit (40) Bestandteile einer Schwingungstilgereinheit bilden.

3. Anordnung nach Anspruch 1 oder 2,
**dadurch gekennzeichnet, dass**
der erste Fahrmotor (30.1) an der Montageeinheit (48) montiert ist.

4. Anordnung nach einem der Ansprüche 1 bis 3,
**dadurch gekennzeichnet, dass**
die Montageeinheit (48) vom Grundkörper (18) getragen wird.

5. Anordnung nach Anspruch 1 und 3,
**dadurch gekennzeichnet, dass**
die Montageeinheit (48) mittels der Federvorrichtung (70) am Grundkörper (18) aufgehängt ist.

6. Anordnung nach einem der vorhergehenden Ansprüche,
**dadurch gekennzeichnet, dass**
der zumindest eine Bestandteil der Leistungsversorgungseinheit (40) - zumindest in Fahrtrichtung (20) des Fahrzeugs (12) betrachtet -in einem Mittelbereich (60) der Fahrwerkeinheit (10) angeordnet ist.

7. Anordnung nach einem der vorhergehenden Ansprüche, **gekennzeichnet durch**
zumindest eine Bremsvorrichtung (90), die der Fahrwerkeinheit (10) zugeordnet ist, und eine zur Steuerung der Bremsvorrichtung (90) vorgesehene Steuereinheit (94), die zumindest teilweise in einem Bereich (52) der Fahrwerkeinheit (10) angeordnet ist.

8. Anordnung nach einem der vorhergehenden Ansprüche, **gekennzeichnet durch** eine Sensoreinheit (96), die zur Erfassung zumindest einer Kenngröße der Fahrwerkeinheit (10) dient, und eine Auswerteeinheit (102) zur Auswertung der Kenngröße, die zumindest teilweise in einem Bereich (52) der Fahrwerkeinheit (10) angeordnet ist.

9. Anordnung nach Anspruch 7 oder 8,
**dadurch gekennzeichnet, dass**
die Steuereinheit (94) und/oder die Auswerteeinheit (102) zumindest teilweise Bestandteil der Leistungsversorgungseinheit (40) ist.

10. Schienenfahrzeug mit einem ersten Wagenkasten (26) und einer Anordnung nach einem der vorhergehenden Ansprüche.

## Claims

1. Assembly for a vehicle (12), especially a rail vehicle, which
- comprises an undercarriage unit (10) with at least a first wheel set (14.1, 14.2) supported on a track (16) and a main body (18) supported on the first wheel set (14.1, 14.2), having a coupling mechanism (28) for mechanical coupling to at least one car body (26; 27) of the vehicle (12),
- at least a first driving motor (30.1, 30.2), which is provided for driving the first wheel set (14.1, 14.2),
- at least one power supply unit (40), which is provided to supply the driving motor (30.1, 30.2) with electric power and comprises at least one inverter unit (42.1, 42.2), at least one constituent part of the power supply unit (40) being arranged in a region (52) of the undercarriage unit (10),
**characterized by**
- a mounting unit (48; 78; 84) for the mounting of the at least one constituent part of the power supply unit (40), and
- a suspension unit (74; 80; 88) by which the at least one constituent part of the power supply unit (40) is sprung at least against the first wheel set (14.1, 14.2), the suspension unit (74) having a spring device (70) by which the mounting unit (48) is sprung against the main body (18).

2. Assembly according to Claim 1,
**characterized in that**
the spring device (70) and the power supply unit (40) form constituent parts of a vibration absorber unit.

3. Assembly according to Claim 1 or 2,
**characterized in that**
the first driving motor (30.1) is mounted on the mounting unit (48) .

4. Assembly according to one of Claims 1 to 3,
**characterized in that**
the mounting unit (48) is carried by the main body (18).

5. Assembly according to Claims 1 and 3,
**characterized in that**
the mounting unit (48) is hung by means of the spring device (70) on the main body (18).

6. Assembly according to one of the preceding claims,
**characterized in that**
the at least one constituent part of the power supply unit (40) - at least looking in the direction of travel (20) of the vehicle (12) - is arranged in a middle region (60) of the undercarriage unit (10).

7. Assembly according to one of the preceding claims,
**characterized by**
at least one brake device (90), which is coordinated with the undercarriage unit (10), and a control unit (94) provided to control the brake device (90), which is arranged at least partly in a region (52) of the undercarriage unit (10).

8. Assembly according to one of the preceding claims,
**characterized by** a sensor unit (96), which serves to detect at least one characteristic quantity of the undercarriage unit (10), and an evaluation unit (102) for evaluating the characteristic quantity, which is at least partly arranged in a region (52) of the undercarriage unit (10).

9. Assembly according to Claim 7 or 8,
**characterized in that**
the control unit (94) and/or the evaluation unit (102) is at least partly a constituent part of the power supply unit (40).

10. Rail vehicle with a first car body (26) and an assembly according to one of the preceding claims.

## Revendications

1. Système pour un véhicule (12), notamment un véhicule ferroviaire, qui
- comprend une unité (10) de châssis ayant au moins un premier essieu (14.1, 14.2) s'appuyant sur une voie (16) de circulation et un corps (18) de base, qui s'appuie sur le premier essieu (14.1, 14.2) et qui comprend un dispositif (28) d'accouplement pour l'accouplement mécanique à au moins une caisse (26 ; 27) du véhicule (12),
- au moins un premier moteur (30.1, 30.2) de traction, prévu pour l'entraînement du premier essieu (14.1, 14.2),
- au moins une unité (40) d'alimentation en courant, qui est prévue pour l'alimentation du moteur (30.1, 30.2) de traction en courant électrique et qui comprend au moins une unité (42.1, 42.2) d'onduleur, au moins un constituant de l'unité (40) d'alimentation en courant étant disposé dans une partie (52) de l'unité (10) de châssis,
**caractérisé par**
- une unité (48 ; 78 ; 84) de montage pour le montage du au moins un constituant de l'unité (40) d'alimentation en courant, et
- une unité (74 ; 80 ; 88) de suspension, par laquelle le au moins un constituant de l'unité (40) d'alimentation en courant est suspendu au moins par rapport au premier essieu (14.1, 14.2), l'unité (74) de suspension ayant un système (70) à ressort, par lequel l'unité (48) de montage est suspendue par rapport au corps (18) de base.

2. Système suivant la revendication 1,
**caractérisé en ce que**
le système (70) à ressort et l'unité (40) d'alimentation en courant forment des constituants d'une unité anti-oscillation.

3. Système suivant la revendication 1 ou 2,
**caractérisé en ce que**
le premier moteur (30.1) de traction est monté sur l'unité (48) de montage.

4. Système suivant l'une des revendications 1 à 3,
**caractérisé en ce que**
l'unité (48) de montage est portée par le corps (18) de base.

5. Système suivant les revendications 1 et 3,
**caractérisé en ce que**
l'unité (48) de montage est suspendue au corps (18) de base au moyen du système (70) à ressort.

6. Système suivant l'une des revendications précédentes,
**caractérisé en ce que**
le au moins un constituant de l'unité (40) d'alimentation en courant est disposé - considéré au moins dans la direction (20) de marche du véhicule (12) - dans une partie médiane de l'unité (10) de châssis.

7. Système suivant l'une des revendications précédentes,
**caractérisé par**
au moins un système (90) de frein, qui est associé à l'unité (10) de châssis et une unité (94) de commande, qui est prévue pour commander le système (90) de frein et qui est disposé, au moins en partie, dans une partie (52) de l'unité (10) de châssis.

8. Système suivant l'une des revendications précédentes,
**caractérisé par**
une unité (96) de capteur, qui sert à détecter au moins une grandeur caractéristique de l'unité (10) de châssis et par une unité (102) d'exploitation pour exploiter la grandeur caractéristique, qui est disposée, au moins en partie, dans une partie (52) de l'unité (10) de châssis.

9. Système suivant la revendication 7 ou 8,
**caractérisé en ce que**
l'unité (94) de commande et/ou l'unité (102) d'exploitation est, au moins en partie, un constituant de l'unité (40) d'alimentation en courant.

10. Véhicule ferroviaire ayant une première caisse (26) et un système suivant l'une des revendications précédentes.
